# EUROPEAN PATENT SPECIFICATION

(11) **EP 3 749 506 B1**
(45) Date of publication and mention of the grant of the patent: **07.06.2023**
(21) Application number: 19703296.4
(22) Date of filing: 04.02.2019
(51) Int. Cl.: B29C 65/00

(54) **THE METHOD FOR JOINING OR REPAIRING A PIPE SYSTEM**
VERFAHREN ZUM VERBINDEN ODER REPARIEREN EINES ROHRSYSTEMS
PROCÉDÉ D'ASSEMBLAGE OU DE RÉPARATION D'UN SYSTÈME DE CONDUITES

(30) Priority: 05.02.2018 CN 201810113662
(43) Date of publication of application: 16.12.2020
(73) Proprietor: TSC Innovation AB, 901 30 Umeå (SE)
(72) Inventor: GUNNARSSON, Lars, 169 31 Solna (SE)
(74) Representative: Zacco Sweden AB
(86) International application number: PCT/EP2019/052610
(87) International publication number: WO 2019/149926

(56) References cited:
- WO-A1-2011/046503
- KR-B1- 101 048 176
- US-A- 5 736 715

## Description

### TECHNICAL FIELD

The present invention relates to the field of joining or repairing bonded pipe systems having a thermally insulated pipe including an external pipe of weldable plastic material which surrounds an internal pipe surrounded by an insulating layer arranged in between the external pipe and the internal pipe.

### BACKGROUND ART

A thermally insulated pipe is used typically for transferring thermal conduction liquid, for example, a pipeline in a local district heating system or a cooling system or an oil pipeline. The thermally insulated pipe includes an internal pipe that carries the liquid medium, such as heating medium or cooling medium or oil. The internal pipe can be made of various materials, for example metal, steel or plastic. The internal pipe is surrounded by insulating material, such as polyurethane foam, and is enclosed by a weldable plastic pipe, generally of polyethylene (PE).

The pipe system is typically laid in the ground, and therefore, may be corroded, and undergo high stress and pressure by means of water and moisture that may infiltrate into the pipe system. This may result in leaks over a long period of time, which leads to continuous maintenance. A pipe system of this kind is sometimes arranged below a road or highway, so that it is difficult to access a damaged pipe because the pipe must be lifted up from the ground, which is very expensive.

Therefore, it is very important for the pipe joining to have best quality and mechanical strength. The requirement holds for both cases of new installation and repairing of existing pipes. Installation of a pipe system of a poor quality or a mistake in a pipe system installation may cause a heating network to be malfunctioning over a long period of time.

A prior art method for welding of pipes is disclosed in the published Chinese patent CN101684879.

The welding process of pipe joining requires handling of persons installing and maintaining pipe systems. The welding process requires typically high power and voltage for achieving welded joints between different parts of a pipe system. This may cause safety hazards to the handling persons since high voltage devices have to be handled carefully. Safety regulations have been introduced for electrical tools using operating power in contacting elements above 50 V (AC) and 75 V (DC). To avoid accidents and for safety reasons it is important to achieve high quality welded joints in a pipe system as described above with welding methods that are safe for the handling persons.

Another prior art method for welding plastic pipes is disclosed in KR101048176 wherein a welding net is used when welding a plastic pipe and sleeve by electrofusion. Furthermore also WO2011/046503 discloses prior art method wherein a welding net is used when welding a plastic pipe and sleeve by electrofusion.

### SUMMARY OF THE INVENTION

### Object of the invention

It is an object of the invention to provide a method for joining and repairing a pipe system which overcomes at least some of the aforementioned disadvantages of the prior art.

An object of the present invention is to provide a method for joining and repairing a pipe system which achieves a safe and reliable welded joint when installing and repairing pipe systems.

Another object of the present invention is to provide a method for joining and repairing a pipe system which reduces risk of safety hazards to workers when joining and repairing pipe systems.

Further objects and advantages of the present invention will be disclosed and become apparent from the following description.

These and other objects, apparent from the following description, are achieved by a method as set out in one aspect of the invention. Preferred embodiments of the method are defined in other aspects of the invention.

Specifically the invention is defined by a method for joining or repairing a pipe system according to claim 1.

The method according to the invention is advantageous in that high quality welded joins can be achieved with a low voltage power supply. The specific configuration of the conductive band which is formed of expanded metal mesh provides that the supplied energy, heat, is evenly distributed in the joint region, since the metal strands cross each other and form mesh openings in between the metal strands where the material of the sleeve coupling and the material pipe can melt and fuse together by electrofusion, a high quality joint is formed.

The particular arrangement that the metal strands of the expanded metal mesh extend substantially diagonally across the width of the conductive band from both sides and interlinked configuration of the mesh strands provides that essentially all parts of the conductive band contribute to distribution of the supplied current and heat to the joint region since the current will be conducted across the conductive band. A low voltage power supply can therefore be used for the electrofusion welding which improves the security for the operators. Another advantage with the specific configuration of the conductive band is that the temperature gradient across the joint during the welding is less than 30 degrees, thus a very even heating pattern is achieved. The fusion temperature in the joint may be adapted to particular specifications of the PE material used in a given actual case. However, one example of fusion temperature in the joint is approximately 230°C.

On the contrary, if the conductive band is a net having longitudinal metal strands arranged straight aligned with the longitudinal direction of the band and having crossing metal strands directed straight across the band, the crossing metal strands would not conduct current because there would be very small, or no difference in the electric potential between the longitudinal metal strands, thus only limited current would be conducted through the crossing metal strands. A conductive band of such metal net would require high voltage power supply which increases the risk of safety hazards for the handling persons. There is also a risk that the channels are formed in such a welded joint, which decreases the quality of the joint.

Another advantage with using an expanded metal mesh as conductive band in the joint region is that the expanded metal mesh provides a high stability in the sideways direction of the conductive band, i.e. the axial direction of the bonded pipe. A high stability in the sideways direction of the conductive band is important to achieve an even temperature distribution in the joint region.

The expanded metal mesh used in the present method is configured of a slitted sheet, stretched perpendicularly to the slits, such that diamond or rhombic shaped openings surrounded by interlinked strands of the metal are formed.

The band, the expanded metal mesh preferably has a mesh size, an open area, that allows the material in the sleeve coupling and pipe end to fuse, melt, together to form a strong bond, and the fused material fills the mesh openings. The open area of the mesh allows that the material of the pipe and the material of the sleeve coupling are fused and welded together. In case the mesh size it too small, there is not enough room for the materials to melt together which influences the final result, the fusing material will instead flow out on the sides of joint region. According to one embodiment of the invention the expanded metal mesh is configured with an open area of at least 70 % of the total area of the conductive band. According to another embodiment of the invention, the expanded metal mesh is configured with an open area of at least 90 % of the total area of the conductive band. By having at least 70 % open area of the total area of the conductive band it is ensured that the welded joint obtains a high quality. The total area of the conductive band includes the metal strands and the open area.

According to one embodiment of the invention the expanded metal mesh is processed to increase the heat conductive surface prior to inserting the electrically conductive band in the joint region. Preferably the step of processing comprises forming indentations in the surface of the metal strands of the expanded metal mesh. By indentations is meant very small recesses or dents in the surface of the metal strands. The indentations may be formed in the surface by for example abrading the metal mesh or by blasting the metal mesh with particulate matter such as very fine sand. The indentations in the surface of the metal strands increase the available surface for heat conduction to the plastic material in the joint. This is particularly advantageous when the open area of the conductive band is 70 % or more of the total area of the conductive band.

To avoid accidents and for safety reasons it is important to achieve high quality welded joints in a pipe system with welding methods that are safe for the handling persons. According to one embodiment of the invention the power supplied to the conductive band is direct current of less than 100 V. According to another embodiment of the invention, the power supplied to the conductive band is direct current less than 75 V. This is advantageous in that handling the welding equipment is safe for the operator, and the welding equipment fulfils the safety regulations. Moreover, the power supply unit for the welding equipment can be of smaller size and weight, which is favourable.

The method according to the invention is preferably carried out by a welding tool having means for pressurizing the joint region such that the welded joint obtains a high quality and strength around the whole circumference of the pipe.

According to one embodiment of the invention a pressure of at least 17.5 Nm/cm² is applied to the joint region by the welding tool during the electrofusion welding period. The pressure is applied to the joint region prior to the electrofusion period begins to pressurize the joint throughout the welding period.

It is advantageous to apply a high pressure to the joint region by the welding tool during the electrofusion welding period since the pressure ensures good contact and abutment between the sleeve coupling material, the conductive band and the material in pipe end, and also stabilises the conductive band and holds it in correct position. Another advantage is that the temperature in the joint region fluctuates less and the temperature is even all around the pipe in the joint region.

The high level of pressure also prevents the melting material from flowing away from the joint region, thus the melt is kept in the joint region.

During the electrofusion welding process, the melting material expands and increases in volume. Therefore the pressure in the joint region increases further during the initial part of the heating up and melting of the plastic material. In a typical example the pressure may increase 100% or more during the electrofusion period.

Preferably the welding tool applies a pressure of at least 17.5 Nm/cm² to the joint region during the electrofusion welding period. If the applied pressure is insufficient, i.e. the pressure is too low, the melting plastic material flows away from the joint region in the sideways direction of the conductive band. This causes loss of material and undesirable cooling in the joint region, the welded joint may not obtain a high degree of adhesion and results in a poor quality of the join.

The sleeve coupling is typically provided with a slit along the length of the sleeve coupling. Initially the sleeve coupling is oversized in comparison with the circumference of the pipe end to allow that the sleeve coupling is easily fit on the pipe end. When the electrofusion of the circumferential welding joint is completed the sleeve coupling is prepared for closing of the slit by extrusion welding.

According to one embodiment of the invention the method comprises arranging a first portion of the sleeve coupling to overlap a second portion of the sleeve coupling such that the second portion of the sleeve coupling is arranged to support the first portion of the sleeve coupling, and extrusion welding a joint formed along the edge of the first portion of the sleeve coupling and an outer part of the second portion of the sleeve coupling. This is advantageous in that no further supporting means are necessary to be provided in the longitudinal joint region. By this the welding process is shortened and more efficient.

### BRIEF DESCRIPTION OF THE DRAWINGS

For a better understanding of the present invention reference is made to the following detailed description when read in conjunction with the accompanying drawings, wherein like reference characters refer to like parts throughout the several views. It should be understood that the drawings are not necessarily to scale.
Fig. 1 schematically illustrates a welding tool configured to carry out the electrofusion welding in the method according to the invention.
Fig. 2a schematically illustrates a pipe.
Fig. 2b schematically illustrates a conductive band to be inserted into the joint region.
Fig. 2c schematically illustrates a conductive band, an expanded metal mesh in detail.
Fig. 2d schematically illustrates an alternative embodiment of a conductive band in detail.
Fig. 2e schematically illustrates a sleeve coupling.
Fig. 3 schematically illustrates two pipes with circumferentially welded joints and a sleeve coupling arranged there between obtained by the method according the invention.
Fig. 4 schematically illustrates a cross section of the sleeve coupling prior to extrusion welding.
Fig. 5 schematically illustrates a cross section of the sleeve coupling after extrusion welding.

### DETAILED DESCRIPTION

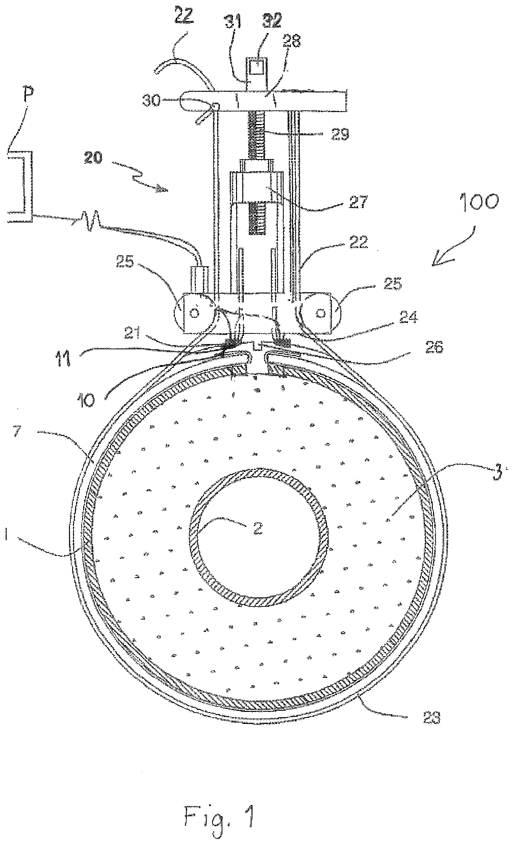

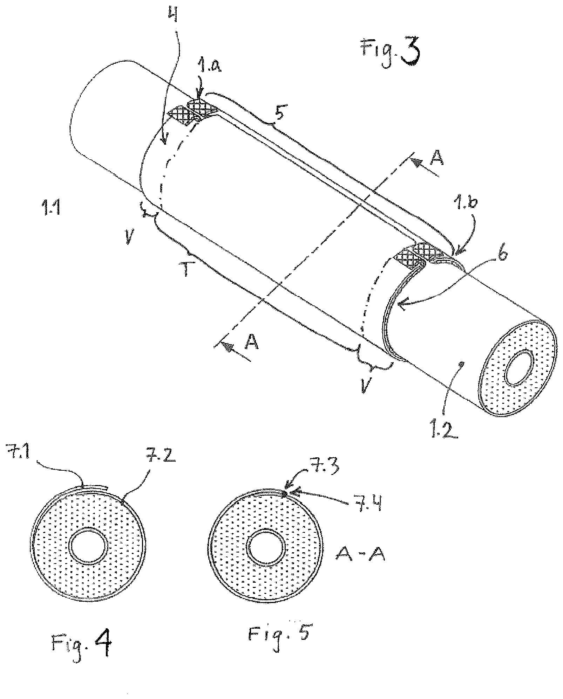

Fig. 1 schematically illustrates a perspective view of a welding tool 100 configured to carry out the electrofusion welding in the method according to the invention to join a pipe system comprising at least two bonded pipes 1 having polyethylene outer casings, wherein the pipes 1 are suitable for transportation of fluids in for example district heating or cooling systems or oil pipelines. The casings, herein also called the outer pipes, can be made of polyethylene (PE) or high density polyethylene (PEHD) or Low density polyethylene (LDPE) or medium density polyethylene (MDPE) or mixtures thereof. The bonded pipes 1 are arranged one after the other. Each outer pipe is arranged to surround an inner pipe 2, made of for example metal such as steel or plastic material, which conduct a heating or cooling medium. The inner pipe 2 is surrounded and embedded in insulation material 3 such as polyurethane foam. In the joining process, two projecting inner pipes face each and are welded together. The outer pipes ends are arranged on a distance T from each other. To form a joint region 4, a sleeve coupling 7 made of polyethylene or PEHD or LDPE or MDPE, is fitted on the outside surface of each pipe end such that the sleeve coupling 7 overlaps the pipe end to connect the two outer pipes 1.1 and 1.2 to one another. The sleeve coupling 7 can be cut to the desired length 5 from a longer tubular workpiece made of a weldable polymer material, where the length 5 is adapted to cover the distance A between the outer pipe ends and the width of the desired weld joint regions on both pipe ends, see Fig. 3.

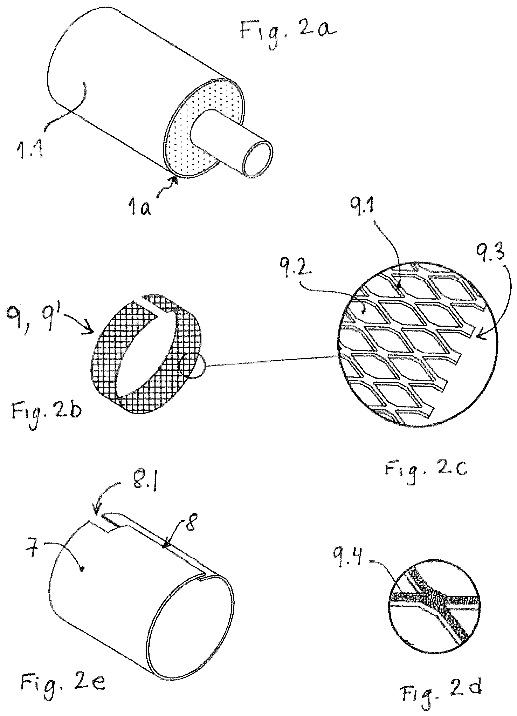

The sleeve coupling 7, is further cut lengthwise to form a longitudinal slit 8 (see Fig. 2e and 3). The slit 8 makes it possible to position, to fit, the cut-to-length sleeve coupling 7 over the exposed section of the inner pipe 2, and overlapping the ends 1a and 1b of the outer pipes. Preferably the sleeve coupling is configured with a larger circumference than the circumference of the outer pipes 1.1 and 1.2. The advantage of working with split, slit sleeve couplings 7 is that that it is easy to fit the sleeve coupling over pipe ends. The contact between the sleeve coupling 7 and outer pipe 1 will also be better because no stresses originate in the sleeve coupling 7, because variations in diameter are compensated by the axial slit 8 in the sleeve coupling 7. A slitted sleeve coupling 7 moves with less resistance over the outer pipe 1. When the sleeve coupling 7 is in position in the weld joint region 4, a part 8.1 of the sleeve material in the weld joint region is removed such that the circumference of the sleeve coupling is adapted to the outer pipes, see Fig. 2e.

To achieve the best result in the welded joint, the plastic surfaces to be welded together are abraded in order to thereby remove oxides and grime, which have an adverse impact on the weld joint's strength and tightness.

After fitting the sleeve coupling over the pipe ends, an electrically conductive band 9 that is pervious to molten plastic material is applied by insertion between the outside surface of a pipe end of one of the outer pipes 1.1 or 1.2 and the inside surface of the sleeve coupling 7. The free ends of the band project upward through the slit of the sleeve 7, see Fig. 1 or 3.

With reference to Fig. 2a-e a first pipe 1.1 with a pipe end 1a, a conductive band 9 and a sleeve coupling 7 configured to be used in a welded joint is schematically illustrated. A second pipe end to be joined with the sleeve coupling is of course necessary to complete the coupling between the pipes, however the second pipe is not illustrated in the figure 2a-e, but can be seen in Fig. 3.

Fig. 2c shows a detail of the conductive band 9, which shows that the electrically conductive band is configured of expanded metal mesh 9' having interlinked metal strands 9.1 and mesh openings 9.2. The expanded metal mesh 9' is formed of a slitted sheet, which is stretched perpendicularly to the slits, such that diamond or rhombic shaped openings 9.2 surrounded by interlinked strands 9.1 of the metal are formed. Preferably the expanded metal mesh is made of stainless steel or similar. The expanded metal mesh is arranged on the circumference of the pipe such that the metal strands extend substantially diagonally across the width of the conductive band. This can be specifically seen in Fig. 2c. The particular arrangement that the metal strands of the expanded metal mesh 9' extend substantially diagonally across the width of the conductive band from both sides and interlinked configuration of the mesh strands provides that essentially all parts of the conductive band 9 contribute to distribution of the supplied current and heat to the joint region since the current will be conducted across the conductive band. Thus the use of an expanded metal mesh arranged as described above for heating between the surfaces that are to be welded together, results in an even distribution of heat over the entire length and width of the weld joint, and a very high-performance, uniform weld joint is obtained. This is due to that all material of the metal strands in the conductive band takes part in distributing the electrical current.

As seen in Fig. 2c, a schematic magnification of the conductive band shown in Fig. 2.b, the longitudinal side 9.3 of the conductive band consists of a zigzag formed edge. By this it is ensured that the supplied power is evenly distributed in the joint region 4 and it is avoided that the longitudinal sides of the welded joint is overheated.

The specific configuration of the conductive band 9 which is formed of expanded metal mesh 9' provides that the supplied energy, heat, is evenly distributed in the joint region, since the metal strands 9.1 cross each other and form mesh openings 9.2 in between the metal strands where the polyethylene material of the sleeve coupling and the polyethylene material pipe can melt and fuse together by electrofusion, a high quality joint is formed.

On the contrary, if the conductive band 9 would be formed like a net having longitudinal metal strands arranged straight aligned with the longitudinal direction of conductive band and further crossing metal strands directed straight across the width of the conductive band, the crossing metal strands will distribute nearly nothing of the current to the joint region since no current will be transmitted through the crossing metal strands. A welded joint obtained with such net may be insufficient, the fusion of the material may be incomplete and there is a risk that longitudinal channels are formed in the welded joint which is detrimental for the long term quality of the welded joint.

The conductive band 9, the expanded metal mesh 9' preferably has a mesh size, an open area, that allows the material in the sleeve coupling and pipe end to fuse, melt, together to form a strong bond, and the fused material fills the mesh openings. The open area of the metal mesh allows that the plastic material, preferably polyethylene (PE) or high density polyethylene (PEHD), of the pipe and the sleeve coupling are fused and welded together. In case the mesh size, the open area, it too small, there is not enough room for the materials to melt together which influences the final result, the fusing material will instead flow out on the sides of joint region, and forms an insufficient joint. According to one embodiment of the invention the expanded metal mesh 9' is configured with an open area of at least 70 % of the total area of the conductive band. By having at least 70 % open area of the total area of the conductive band it is ensured that the welded joint obtains a high quality.

According to another embodiment of the invention, the expanded metal mesh 9' is configured with an open area of at least 90 % of the total area of the conductive band. However the open area is preferably selected depending on the size of the pipe, the available power to be used in the electrofusion operation and the width of the joint region.

The expanded metal mesh 9' is also advantageous in that the material is easily adapted and applied to the joint region.

The expanded metal mesh 9' illustrated in Fig. 2c is provided with a non-treated surface. However, in Fig. 2d a schematic magnification of one side of another expanded metal mesh is shown wherein the surface of the metal strands of the metal mesh have been processed or treated to increase the heat conductive surface. The processing of the metal mesh surface is carried out prior to applying or inserting the electrically conductive band in the joint region. The heat conductive surface is increased by forming indentations 9.4 in the surface of the metal strands 9.1 of expanded metal mesh. By indentations is meant very small recesses or dents or cuts in the surface of the metal strands 9.1. It should be noted that Fig.2d only is a rough illustration, where the indentations are increased in size to show the surface of the metal strands. The indentations 9.4 may be formed in the surface by for example abrading the metal mesh or by blasting the metal mesh with particulate matter such as very fine sand. The indentations 9.4 in the surface of the metal strands 9.1 increase the available surface for heat conduction to the plastic material in the joint. At least one side of the conductive band is processed to increase the available surface for heat conduction. This is particularly advantageous when the open area of the conductive band is 70 % or more of the total area of the conductive band. In particular if the open area of the conductive band is approximately 90 % or more of the total area of the conductive band, the increased surface for heat conduction on the metal strands 9.1 contributes to that a high quality weld is obtained.

Alternatively both sides of the conductive band may be processed to increase the available surface for heat conduction, depending on the pipe material and dimensions, the desired weld quality and the open area of the conductive band.

The width of the conductive band 9 is narrower than the overlap V, the distance which the sleeve coupling overlaps the pipe ends. The welded joint 6 becomes of an equivalent width as the band 9 and is narrower than the overlap V (see Fig. 3).

After inserting the conductive band 9 in the joint region the band ends 10 are bent back over the individual edges of the slit 8 so that a space is formed between the band ends 10 in the slit 8, as shown I Fig. 1.

As can be seen in Fig. 1 the welding tool is provided with a pair of electrodes 21 arranged to be coupled to the bent-up band ends 10 of the conductive band 9 in a coupling area 11 of the electrodes. The electrodes are thereafter connected to a power supply unit P capable of supplying regulated current sufficient to heat the electrically conductive band 9 to a predetermined temperature for a regulated period of time such that the material of the pipe end and the sleeve coupling in the joint region is welded by electrofusion of the joint region in order to form a weld joint.

In this type of welding tools the coupling area 11 is not covered and is therefore available to be touched by an operator which maybe a cause of accident for the operator. The electrofusion welding process typically requires high power and voltage for achieving high quality welded joints between different parts of a bonded pipe system, improper handling of a welding tool in such case may therefore be very hazardous for the operator. Moreover, international safety regulations have been introduced that require that persons handling electrical equipment are protected from such dangerous situations. Such regulations have indicated voltage limitations for electrical devices that are arranged such that an operator may get into contact with the conducting parts.

To avoid accidents and for safety reasons it is important to achieve high quality welded joints in a pipe system as described above with welding methods that are safe for the handling persons.

Owing to configuration of the conductive band 9, the particular arrangement that the metal strands of the expanded metal mesh extend substantially diagonally across the width of the conductive band from both sides and interlinked configuration of the mesh strands provides that essentially all parts of the conductive band contribute to distribution of the supplied current and heat to the joint region since the current will be conducted diagonally across the conductive band. This is particularly advantageous in that a low level voltage power supply can be used for the electrofusion welding which improves the security for the operators without compromising a high quality weld.

According to one embodiment of the invention the power supplied to the conductive band is direct current of less than 100 V. This is advantageous in that an even and very high quality weld is obtained with a low level of voltage power which is not harmful to an operator in case the operator would come into contact with the conductors.

According to another embodiment of the invention the power supplied to the conductive band is direct current less than 75 V. By this an even and very high-performance, uniform weld joint is obtained with a low level of voltage power which is safe for an operator.

The method according to the invention is carried out by use of a welding tool 100 which comprises a pressure means 20 for pressurizing the circumferential joint region during the welding process. The pressure means comprises a flexible clamping band 22 arranged in a loop 23 which is connected to a tensioning device 24-30. The clamping band 22 is arranged to press the sleeve coupling 7 against the pipe end when it is placed around the sleeve coupling 7 by the action of the tensioning device. The tensioning device 24-30 comprises a support element 24 designed to rest against the sleeve coupling 7, two contact rollers 25 configured to hold the clamping band 22 in contact with the sleeve coupling 7.

By attaching the pressure means 20, with the clamping band 22 and the tensioning device on the outside of the sleeve 7 in the joint region, an even pressure fore can be applied over the whole circumference of the joint region during the electrofusion welding, to obtain a high quality welded joint. Preferably, a pressure of at least 17.5 Nm/cm² is applied to the joint region by the pressure means of the welding tool during the electrofusion welding period.

The tensioning device 24-30 further comprises a movable threaded component 28, a tensioning screw 29 and a connecting means 32 for connecting a torque tool, a torque wrench, adapted to apply a predetermined torque to the tensioning device 24-30 to obtain the required pressure in the joint region around the clamping band. In an alternative embodiment the tensioning screw 29 can be replaced by a hydraulic or pneumatic device or a device that can be operated in another manner, e.g., cylinders or gear racks, acting between the supporting component and the clamping band's ends.

When the sleeve coupling's 7 circumferential weld 6 is complete and the clamping device 20 has been removed, the band ends 10 are removed by cutting them away from the slit 8, for example with a hand router. By cutting material away and enlarging the slit 8 near the circumferential weld joint, any pores or cracks that may be present in the junction with the slit are removed.

Initially, prior to welding, the sleeve coupling is preferably oversized i.e. has a larger circumference in comparison with the circumference of the pipe end, to allow that the sleeve coupling is easily fit on the pipe ends 1a,1b. When the electrofusion of the circumferential welding joint 6 is completed the sleeve coupling 7 is prepared for closing of the slit 8 by extrusion welding.

The circumference of the sleeve coupling 7 in the region of the open slit 8 is adapted to correspond to the circumference of sleeve coupling 7 in the region of the circumference weld joint 6.

With reference to Fig. 4 the sleeve coupling 7 is provided with a first portion 7.1 of the sleeve coupling and a second portion 7.2 of the sleeve coupling 7. As previously mentioned, the sleeve has preferably a larger circumference than the pipe 1.

The first portion 7.1 of the sleeve coupling is arranged to overlap the second portion 7.2 of the sleeve coupling such that the second portion of the sleeve is arranged below and inside the sleeve coupling. This is show in Fig. 4 and 5. Preferably the sleeve coupling material is slightly resilient such that the second portion of the sleeve coupling moves outwards to be in contact with the first portion of the sleeve coupling, as shown in Fig. 4 and 5. This is advantageous in that the second portion 7.2 of the sleeve coupling can support the first portion 7.1 of the sleeve coupling in the next step.

Thereafter the slit 8 is welded to close the sleeve coupling 7, whereby a continuous welding bead 7.4 laid along the entire length of an edge 7.3 of the first portion 7.1 of the sleeve coupling to an outer part of the second portion 7.2 of the sleeve coupling 7. Preferably a so-called extrusion welding tool is used for extrusion welding, which also supplies the weld joint with material. By this arrangement no further supporting means are necessary to be provided in the longitudinal joint. Thus the welding process is shortened and more efficient. --

## Claims

1. Method for joining or repairing a pipe system comprising at least two bonded pipes (1.1,1.2) having polyethylene outer casing, the method comprising the steps of
- forming a joint region (4) by fitting a sleeve coupling (7) of weldable polyethylene on the outside surface of a pipe end (1.1) of a bonded pipe such that the sleeve coupling (7) overlaps the pipe end and inserting an electrically conductive band (9) between the outside surface of the pipe end and the inside surface of the sleeve coupling, wherein the electrically conductive band (9) is configured of expanded metal mesh having metal strands (9.1) and mesh openings (9.2) , and arranging the expanded metal mesh (9') such that the metal strands (9.1) extend substantially diagonally across the width of the conductive band (9),
- electrofusion welding of the joint region (4) in order to form a weld joint (6) by supplying power to the electrically conductive band (9),
- application of a pressure force on the joint region (4) during the electrofusion welding by a welding tool (100) for pressurizing the joint region (4),
and extrusion welding a longitudinal joint (7.4) formed on the sleeve coupling (7),
and comprising a step of processing the expanded metal mesh (9') to increase the heat conductive surface prior to inserting the electrically conductive band (9) in the joint region, wherein the step of processing comprises sandblasting the expanded metal mesh thereby forming indentations (9.4) in the surface of the metal strands (9.1) of the expanded metal mesh (9').

2. Method according to claim 1 wherein the expanded metal mesh (9') is configured with an open area of at least 70 % of the total area of the conductive band (9).

3. Method according to claim 1 wherein the expanded metal mesh (9') is configured with an open area of more than 90 % of the total area of the conductive band (9).

4. Method according to any of the previous claims wherein the power supplied to the conductive band (9) is direct current of less than 100 V.

5. Method according to any of the claims 1-3 wherein the power supplied to the conductive band (9) is direct current less than 75 V.

6. Method according to one of claims 1-5 comprising applying a pressure of at least 17.5 Nm/cm² to the joint region by the welding tool (100) during the electrofusion welding period.

7. Method according to any of the claims 1-6 wherein the sleeve coupling (7) is provided with a slit (8) along the length of the sleeve coupling (7), and arranging a first portion (7.1) of the sleeve coupling to overlap a second portion of the sleeve coupling such that the second portion (7.2) of the sleeve coupling is arranged to support the first portion (7.1) of the sleeve coupling, and extrusion welding a joint (7.4) formed along the edge (7.3) of the first portion (7.1) of the sleeve coupling and an outer part of the second portion (7.2) of the sleeve coupling.

## Patentansprüche

1. Verfahren zum Verbinden oder Reparieren eines Rohrsystems umfassend mindestens zwei plattierte Rohre (1.1,1.2) mit einem Außenmantel aus Polyethylen, wobei das Verfahren die folgenden Schritte umfasst
- Bilden eines Verbindungsbereichs (4) durch Montieren einer Hülsenkupplung (7) aus schweißbarem Polyethylen an der Außenfläche eines Rohrendes (1.1) eines plattierten Rohrs derart, dass die Hülsenkupplung (7) das Rohrende überlappt, und Einsetzen eines elektrisch leitenden Bandes (9) zwischen der Außenfläche des Rohrendes und der Innenfläche der Hülsenkupplung, wobei das elektrisch leitende Band (9) aus Streckmetallgitter mit Metalllitzen (9.1) und Maschenweiten (9.2) gebildet ist, und Anordnen des Streckmetallgitters (9') derart, dass sich die Metalllitzen (9.1) im Wesentlichen diagonal über die Breite des leitenden Bandes (9) erstrecken,
- Heizwendelschweißen des Verbindungsbereichs (4), um eine Schweißverbindung (6) durch Einspeisen von Energie in das elektrisch leitende Band (9) zu bilden,
- Ausüben einer Druckkraft auf den Verbindungsbereich (4) während des Heizwendelschweißens durch ein Schweißwerkzeug (100), um den Verbindungsbereich (4) unter Druck zu setzen,
und Extrusionsschweißen einer auf der Hülsenkupplung (7) gebildeten Längsfuge (7.4),
und umfassend einen Schritt der Verarbeitung des Streckmetallgitters (9'), um die wärmeleitende Oberfläche vor dem Einsetzen des elektrisch leitenden Bandes (9) in den Verbindungsbereich zu vergrößern, wobei der Schritt der Verarbeitung das Sandstrahlen des Streckmetallgitters umfasst, wodurch Einbuchtungen (9.4) in der Oberfläche der Metalllitzen (9.1) des Streckmetallgitters (9') gebildet werden.

2. Verfahren nach Anspruch 1, wobei das Streckmetallgitter (9') mit einem offenen Bereich von zumindest 70 % des gesamten Bereichs des leitenden Bandes (9) ausgebildet ist.

3. Verfahren nach Anspruch 1, wobei das Streckgitter (9') mit einem offenen Bereich von mehr als 90 % des gesamten Bereichs des leitenden Bandes (9) ausgebildet ist.

4. Verfahren nach einem der vorgehenden Ansprüche, wobei die in das leitende Band (9) gespeiste Energie Gleichstrom von mehr als 100 V ist.

5. Verfahren nach einem der Ansprüche 1-3, wobei die in das leitende Band (9) gespeiste Energie Gleichstrom von weniger als 75 V ist.

6. Verfahren nach einem der Ansprüche 1-5 umfassend das Ausüben eines Drucks von zumindest 17,5 Nm/cm² auf den Verbindungsbereich durch das Schweißwerkzeug (100) während der Zeit des Heizwendelschweißens.

7. Verfahren nach einem der Ansprüche 1-6, wobei die Hülsenkupplung (7) mit einem Schlitz (8) entlang der Länge der Hülsenkupplung (7) versehen ist, und Anordnen eines ersten Abschnitts (7.1) der Hülsenkupplung, so dass ein zweiter Abschnitt der Hülsenkupplung überlappt wird, so dass der zweite Abschnitt (7.2) der Hülsenkupplung dazu angeordnet wird, den ersten Abschnitt (7.1) der Hülsenkupplung zu unterstützen, und Extrusionsschweißen einer Verbindung (7.4), die entlang von dem Rand (7.3) des ersten Abschnitts (7.1) der Hülsenkupplung und einem äußeren Teil des zweiten Abschnitts (7.2) der Hülsenkupplung gebildet wird.

## Revendications

1. Procédé d'assemblage ou de réparation d'un système de conduites comprenant au moins deux conduites collées (1.1, 1.2) ayant une enveloppe extérieure en polyéthylène, le procédé comprenant les étapes consistant à
- former une région de joint (4) en ajustant un raccord à manchon (7) en polyéthylène soudable sur la surface extérieure d'une extrémité de tuyau (1.1) d'un tuyau collé de telle sorte que le raccord à manchon (7) chevauche l'extrémité de tuyau et en insérant une bande électriquement conductrice (9) entre la surface extérieure de l'extrémité de tuyau et la surface intérieure du raccord à manchon, la bande électriquement conductrice (9) étant configurée en treillis métallique déployé ayant des brins métalliques (9.1) et des ouvertures de treillis (9.2), et agencer le treillis métallique déployé (9') de sorte que les brins métalliques (9.1) s'étendent essentiellement en diagonale sur la largeur de la bande conductrice (9),
- souder par électrofusion la région de joint (4) pour former un joint de soudure (6) en alimentant la bande électriquement conductrice (9),
- appliquer une force de pression sur la région de joint (4) pendant le soudage par électrofusion par un outil de soudage (100) pour pressuriser la région de joint (4),
et souder par extrusion un joint longitudinal (7.4) formé sur le raccord à manchon (7),
et comprenant l'étape de traitement du treillis métallique déployé (9') pour augmenter la surface thermoconductrice avant d'insérer la bande électriquement conductrice (9) dans la région de joint, dans lequel l'étape de traitement comprend le sablage du treillis métallique déployée, formant ainsi des indentations (9.4) dans la surface des brins métalliques (9.1) du treillis métallique déployée (9').

2. Procédé selon la revendication 1, dans lequel le treillis métallique déployé (9') est configuré avec une surface ouverte d'au moins 70% de la surface totale de la bande conductrice (9).

3. Procédé selon la revendication 1, dans lequel le treillis métallique déployé (9') est configuré avec une surface ouverte de plus de 90% de la surface totale de la bande conductrice (9).

4. Procédé selon l'une quelconque des revendications précédentes, dans lequel la puissance fournie à la bande conductrice (9) est un courant continu inférieur à 100 V.

5. Procédé selon l'une quelconque des revendications 1 à 3, dans lequel la puissance fournie à la bande conductrice (9) est un courant continu inférieur à 75 V.

6. Procédé selon l'une des revendications 1 à 5, comprenant l'application d'une pression d'au moins 17,5 Nm/cm² sur la région de joint par l'outil de soudage (100) pendant la période de soudage par électrofusion.

7. Procédé selon l'une des revendications 1 à 6, dans lequel le raccord à manchon (7) est pourvu d'une fente (8) le long de la longueur du raccord à manchon (7), et l'agencement d'une première partie (7.1) du raccord à manchon pour chevaucher une deuxième partie du raccord à manchon de sorte que la deuxième partie (7.2) du raccord à manchon est agencée pour supporter la première partie (7.1) du raccord à manchon, et le soudage par extrusion d'un joint (7.4) formé le long du bord (7.3) de la première partie (7.1) du raccord à manchon et une partie extérieure de la deuxième partie (7.2) du raccord à manchon.
